# EUROPÄISCHE PATENTSCHRIFT

(11) **EP 1 911 632 B1**
(45) Veröffentlichungstag und Bekanntmachung des Hinweises auf die Patenterteilung: **05.08.2009**
(21) Anmeldenummer: 07019612.6
(22) Anmeldetag: 08.10.2007
(51) Int. Cl.: B60R 16/02, H02G 3/32, F16L 3/04, F16L 3/12, F16L 3/18

(54) **Befestigungsvorrichtung für eine Leitung**
Mounting device for a conduit
Dispositif de fixation pour une conduite

(30) Priorität: 12.10.2006 DE 202006015674 U
(43) Veröffentlichungstag der Anmeldung: 16.04.2008
(73) Patentinhaber: TRW Automotive Electronics & Components GmbH, 78315 Radolfzell (DE)
(72) Erfinder: Jatzke, Stefan, 67280 Ebertsheim (DE); Hofmann, Jürgen, 67304 Eisenberg (DE)
(74) Vertreter: Prinz & Partner

(56) Entgegenhaltungen:
- CH-A5- 571 674
- FR-A- 2 677 730
- GB-A- 1 084 047

## Beschreibung

Die Erfindung betrifft eine Befestigungsvorrichtung für eine Leitung gemäß dem Oberbegriff des Anspruchs 1.

Zur Befestigung einer Leitung wie etwa einer Hydraulikleitung oder einer elektrischen Leitung in Form eines Kabels oder Kabelstrangs an einem Träger, insbesondere an einer Fahrzeugkarosserie, sind verschiedene Befestigungsvorrichtungen bekannt. Eine Leitung kann zum Beispiel an einer Schiene angebracht werden, wobei die Schiene durch einen anschließenden Klammerabschnitt an einer Kante der Fahrzeugkarosserie angeclipst wird. Es sind auch zweiteilige Kabelbefestigungen bekannt, die aus einer Schiene und einem Fußteil bestehen. Die Fußteile rasten in vorgesehene Löcher in der Karosserie ein, um die Schiene mit dem Kabel an der Karosserie zu befestigen. Die zweiteiligen Befestigungsvorrichtungen haben aber in der Regel den Nachteil, daß sie erst zusammengebaut werden müssen.

Eine Befestigungsvorrichtung mit den Merkmalen des Oberbegriffs des Anspruchs 1 ist aus der GB-A-1 084 047 bekannt. Die Befestigungsvorrichtung weist eine drehbare Basis auf, von der sich zwei geschwungene Arme erstrecken. Eine Leitung kann zwischen zwei parallele Abschnitte der Arme gelegt und durch Drehung der Basis relativ zur Leitung fixiert werden.

Die Aufgabe der Erfindung besteht darin, eine leicht zu handhabende Befestigungsvorrichtung für eine Leitung bereitzustellen, die kostengünstig ist und eine Befestigung an einem Träger erleichtert.
Gelöst wird diese Aufgabe durch eine Befestigungsvorrichtung mit den Merkmalen des Anspruchs 1. Die Erfindung beruht auf der Erkenntnis, daß die Befestigung einer Leitung an einem Träger durch einen Monteur wesentlich schneller und einfacher durchführbar ist, wenn die Befestigungs-vorrichtung auf der Leitung vorfixiert werden kann. Der gemäß der Erfindung zusätzlich vorgesehene Halteabschnitt ermöglicht es, die Befestigungsvorrichtung vor der Befestigung am Träger in einfacher Weise provisorisch an der Leitung anzubringen. Die Position der Befestigungsvorrichtung auf der Leitung kann gegebenenfalls korrigiert werden, bevor die Befestigungsvorrichtung mit ihrem Befestigungsabschnitt endgültig am Träger montiert wird. Falls erforderlich, kann die Leitung zusätzlich zur Fixierung durch den Halteabschnitt noch auf andere Weise mit der Befestigungsvorrichtung verbunden werden.

Gemäß der bevorzugten Ausführungsform der Erfindung sind zwei sich in entgegengesetzte Richtungen erstreckende Halteabschnitte vorgesehen. Dies ermöglicht eine stabilere Fixierung auf der Leitung. Der Halteabschnitt weist einen Haltebügel auf, der sich quer über die Leitung erstreckt. Der Haltebügel ist über einen sich längs der Leitung erstreckenden Ausleger mit dem Auflageabschnitt verbunden. Der Ausleger kann als Befestigungsschiene und Führung für die Leitung genutzt werden, wenn eine feste Anbringung der Leitung an der Befestigungsvorrichtung mit einem Klebeband oder dergleichen vorgesehen ist.

Ein Halteabschnitt, der so ausgebildet ist, daß sich die Leitung zwischen dem Auflageabschnitt und dem Halteabschnitt einklemmen läßt, ermöglicht eine besonders einfache Vorfixierung ohne weitere Hilfsmittel. Die Vorfixierung kann auch leicht wieder gelöst werden.

Ein elastisch verformbarer Halteabschnitt sorgt für eine einfache Handhabung und Stabilisierung der Befestigungsvorrichtung auf der Leitung.

Um ein unerwünschtes Verrutschen der Befestigungsvorrichtung auf der Leitung zu verhindern, kann der Auflageabschnitt mehrere als Verschiebesicherung wirkende Rippen aufweisen.

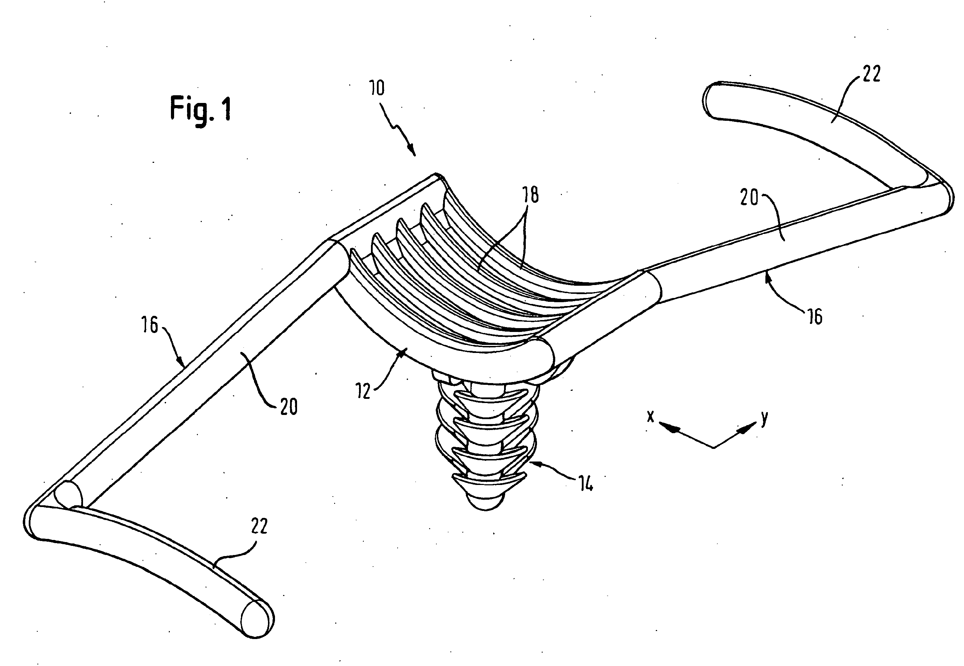

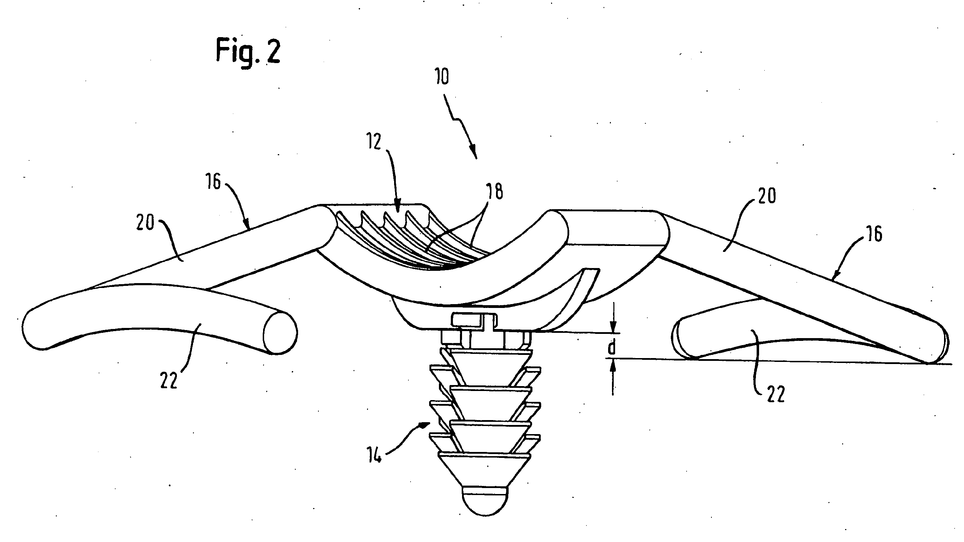

Weitere Merkmale und Vorteile der Erfindung ergeben sich aus der nachfolgenden Beschreibung einer bevorzugten Ausführungsform und aus den beigefügten Zeichnungen, auf die Bezug genommen wird. In den Zeichnungen zeigen die Figuren 1 und 2 zwei verschiedene perspektivische Ansichten einer erfindungsgemäßen Befestigungsvorrichtung.

Die in den Figuren 1 und 2 dargestellte Befestigungsvorrichtung 10 besteht aus Kunststoff und weist einen Auflageabschnitt 12 für eine an einem Träger zu befestigende Leitung, einen Befestigungsabschnitt 14 und zwei Halteabschnitte 16 auf. Der Befestigungsabschnitt 14 erstreckt sich von der der Leitung abgewandten Seite des Auflageabschnitts 12 und dient zur Befestigung der Befestigungsvorrichtung 10 am Träger. Je nach Art der vorgesehenen Befestigung (in einer Bohrung, an einem Gewindebolzen, an einer Blechkante, etc.) kann der Befestigungsabschnitt 14 unterschiedlich gestaltet sein.

Der Auflageabschnitt 12 ist in einer Querrichtung x gewölbt und weist auf der dem Befestigungsabschnitt 14 abgewandten Seite eine konkave Auflagefläche für die Leitung auf. Die Auflagefläche ist beim dargestellten Ausführungsbeispiel durch mehrere parallel angeordnete Rippen 18 gebildet, die sich in Querrichtung x erstrecken.

Von diametralen Enden des Auflageabschnitts 12 erstrecken sich die zwei Halteabschnitte 16 in entgegengesetzte Richtungen. Die Halteabschnitte 16 setzen sich jeweils aus einem elastisch verformbaren (biegsamen) länglichen Ausleger 20 und einem in Querrichtung x gewölbten Bügel 22 zusammen, wobei die Wölbung des Bügels 22 der Wölbung des Auflageabschnitts 12 entgegengesetzt ist. Wie insbesondere in Figur 2 zu erkennen ist, sind die Ausleger 20 bezüglich einer zur Querrichtung x senkrechten Längsrichtung y in Richtung des Befestigungsabschnitts 14 (das heißt gemäß der Darstellung der Figur 2 nach unten) geneigt. Die Höhendifferenz zwischen dem untersten Punkt des Auflageabschnitts 12 und den unteren Enden der Bügel 22 ist in Figur 2 mit d bezeichnet.

Zur Befestigung der Leitung am Träger wird die Befestigungsvorrichtung 10 zunächst auf der Leitung vorfixiert. Dazu wird die Leitung in Längsrichtung y auf die Auflagefläche 18 und die beiden Haltebügel 22 entsprechend ihrer Wölbung auf die Leitung gelegt. Aufgrund der Neigung der länglichen Ausleger 20 wirkt eine Klemmkraft zwischen den Bügeln 22 und dem Auflageabschnitt 12 auf die Leitung, so daß die Befestigungsvorrichtung 10 auf der Leitung fixiert ist. Die Klemmkraft ist maßgeblich durch die Höhendifferenz d bestimmt. Die Rippen 18 des Auflageabschnitts 12 wirken einem Verrutschen der Befestigungsvorrichtung 10 auf der Leitung in Längsrichtung y entgegen. Dennoch kann die Position der Befestigungsvorrichtung 10 nach der Vorfixierung noch beliebig verändert werden, da diese Vorfixierung problemlos lösbar ist. Zur endgültigen Befestigung der Leitung am Träger wird die Befestigungsvorrichtung 10 dann mit dem Befestigungsabschnitt 14 am Träger montiert. Falls die Klemmkraft der Halteabschnitte 16 nicht ausreicht oder eine zusätzliche Sicherung erfolgen soll, kann die Leitung mit einem Kabelbinder, einer Kabelschelle, einem Klebeband oder auf sonstige Weise mit dem in diesem Fall als Schiene dienenden Ausleger 20 verbunden werden.

Die erfindungsgemäße Befestigungsvorrichtung 10 kann vorteilhaft als einstückiges Teil in einem Spritzgußverfahren hergestellt werden. Die Befestigungsvorrichtung 10 findet nicht nur im Kfz-Bereich, sondern insbesondere auch bei Elektrogeräten wie zum Beispiel Kühlschränken, Herden, Waschmaschinen, Spülmaschinen, Trocknern, etc. (sogenannte weiße Ware) Anwendung.

## Patentansprüche

1. Befestigungsvorrichtung (10) für eine Leitung, mit einem Befestigungsabschnitt (14) zur Anbringung der Befestigungsvorrichtung (10) an einem Träger, einem Auflageabschnitt (12) für die Leitung, und wenigstens einem zusätzlichen, sich vom Auflageabschnitt (12) erstreckenden Halteabschnitt (16), der einen Haltebügel (22) aufweist, wobei sich zur Vorfixierung der Befestigungsvorrichtung (10) an der Leitung, die eine Korrektur der Position der Befestigungsvorrichtung (10) auf der Leitung erlaubt, der Haltebügel (22) quer über die Leitung erstreckt, und wobei der Haltebügel (22) über einen sich längs der Leitung erstreckenden Ausleger (20) mit dem Auflageabschnitt (12) verbunden ist, **dadurch gekennzeichnet, dass** der Ausleger (20) länglich ist und in Richtung des Befestigungsabschnitts (14) geneigt ist.

2. Befestigungsvorrichtung nach Anspruch 1, **dadurch gekennzeichnet, daß** zwei sich in entgegengesetzte Richtungen erstreckende Halteabschnitte (16) vorgesehen sind.

3. Befestigungsvorrichtung nach Anspruch 1 oder 2, **dadurch gekennzeichnet, daß** der Halteabschnitt (16) so ausgebildet ist, daß sich die Leitung zwischen dem Auflageabschnitt (12) und dem Halteabschnitt (16) einklemmen läßt.

4. Befestigungsvorrichtung nach einem der vorhergehenden Ansprüche,
**dadurch gekennzeichnet, daß** der Halteabschnitt (16) elastisch verformbar ist.

5. Befestigungsvorrichtung nach einem der vorhergehenden Ansprüche,
**dadurch gekennzeichnet, daß** der Auflageabschnitt (12) mehrere als Verschiebesicherung wirkende Rippen (18) aufweist.

## Claims

1. A fastening device (10) for a lead, comprising a fastening portion (14) for mounting the fastening device (10) to a support, a support portion (12) for the lead, and at least one additional holding portion (16) extending from the support portion (12) and including a holding bracket (22), the holding bracket (22) extending transversely over the lead for pre-fixing the fastening device (10) in place on the lead, which allows the position of the fastening device (10) on the lead to be corrected, and the holding bracket (22) being connected with the support portion (12) via an arm (20) extending along the lead, **characterized in that** the arm (20) is elongated and inclined towards the fastening portion (14).

2. The fastening device according to claim 1, **characterized in that** two holding portions (16) extending in opposite directions are provided.

3. The fastening device according to claim 1 or 2, **characterized in that** the holding portion (16) is constructed such that the lead can be clamped between the support portion (12) and the holding portion (16).

4. The fastening device according to any of the preceding claims, **characterized in that** the holding portion (16) is elastically deformable.

5. The fastening device according to any of the preceding claims, **characterized in that** the support portion (12) has several ribs (18) acting as an anti-displacement protection.

## Revendications

1. Dispositif de fixation (10) pour une conduite, comportant un tronçon de fixation (14) destiné au montage du dispositif de fixation (10) sur un support, un tronçon d'appui (12) pour la conduite, et au moins un tronçon de retenue (16) additionnel s'étendant depuis le tronçon d'appui (12), lequel présente un étrier de retenue (22), l'étrier de retenue (22) s'étendant transversalement sur la conduite pour la fixation préalable du dispositif de fixation (10) sur la conduite, qui permet une correction de la position du dispositif de fixation sur la conduite, et l'étrier de retenue (22) étant relié au tronçon d'appui (12) par un bras (20) s'étendant le long de la conduite, **caractérisé en ce que** le bras (20) est allongé et incliné en direction du tronçon de fixation (14).

2. Dispositif de fixation selon la revendication 1, **caractérisé en ce qu'**il est prévu deux tronçons de retenue (16) s'étendant dans des directions opposées.

3. Dispositif de fixation selon la revendication 1 ou 2, **caractérisé en ce que** le tronçon de retenue (16) est réalisé de telle sorte que la conduite peut être serrée entre le tronçon d'appui (12) et le tronçon de retenue (16).

4. Dispositif de fixation selon l'une des revendications précédentes, **caractérisé en ce que** le tronçon de retenue (16) est élastiquement déformable.

5. Dispositif de fixation selon l'une des revendications précédentes, **caractérisé en ce que** le tronçon d'appui (12) présente plusieurs nervures agissant en tant que protection anti-déplacement.
